(19) Europäisches Patentamt / European Patent Office / Office européen des brevets

(11) **EP 4 770 231 A1**

(12) **EUROPEAN PATENT APPLICATION**
published in accordance with Art. 153(4) EPC

(43) Date of publication:
**01.07.2026 Bulletin 2026/27**

(21) Application number: **24870609.5**

(22) Date of filing: **20.09.2024**

(51) International Patent Classification (IPC):
***H04W 72/0446*** (2023.01)

(52) Cooperative Patent Classification (CPC):
**H04W 4/40; H04W 28/26; H04W 72/0446;
H04W 72/20**

(86) International application number:
**PCT/CN2024/120057**

(87) International publication number:
**WO 2025/067065 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311282176**

(71) Applicant: **HUAWEI TECHNOLOGIES CO., LTD.
Shenzhen 518129 (CN)**

(72) Inventors:
• **ZHANG, Yi**
  **Shenzhen, Guangdong 518129 (CN)**
• **LIU, Yating**
  **Shenzhen, Guangdong 518129 (CN)**
• **QI, Hong**
  **Shenzhen, Guangdong 518129 (CN)**
• **SU, Hongjia**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57)    A communication method and apparatus are applied to the field of vehicle to everything (V2X) or the like. The method includes: determining a first slot in a resource selection window, where the first slot is used to transmit a first reference signal, the resource selection window includes at least one slot, and the first slot is an unreserved slot, or the first slot is a slot reserved for transmitting a second reference signal; and sending first indication information, where the first indication information indicates the first slot. According to the foregoing method, a flexible method for determining a reference signal resource is implemented through sensing and resource selection, and the first slot determined in the resource selection window is an unreserved slot or a slot reserved for transmitting the second reference signal. Therefore, a same slot is not shared with a resource for data transmission, so that sending of the first reference signal in the first slot does not interfere with data transmission in the first slot, thereby ensuring reliability of data transmission.

FIG. 6

**Description**

CROSS-REFERENCE TO RELATED APPLICATIONS

This application claims priority to Chinese Patent Application No. 202311282176.6, filed with the China National Intellectual Property Administration on September 28, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

Beam management is an important technology proposed for a frequency range 2 (frequency range 2, FR2) in 5G new radio (new radio, NR), and is a process in which a base station and a terminal device obtain and maintain a beam set for sending and receiving.

In an NR system, terminal devices may further communicate with each other over a sidelink (sidelink, SL). Therefore, beam management may also be performed between the terminal devices. During beam management, the terminal devices need to select resources for transmitting reference signals. Therefore, how the terminal devices select resources for reference signal transmission on the sidelink is an urgent problem to be resolved.

SUMMARY

This application provides a communication method and apparatus, to resolve a problem of how to select resources for reference signal transmission on a sidelink.

According to a first aspect, a first communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The method includes: determining a first slot in a resource selection window, where the first slot is used to transmit a first reference signal, the resource selection window includes at least one slot, and the first slot is an unreserved slot, or the first slot is a slot reserved for transmitting a second reference signal; and sending first indication information, where the first indication information indicates the first slot.

According to the foregoing method, a flexible method for determining a reference signal resource is implemented through sensing (sensing) and resource selection, and the first slot determined in the resource selection window is an unreserved slot or a slot reserved for transmitting the second reference signal. Therefore, a same slot is not shared with a resource for data transmission, so that sending of the first reference signal in the first slot does not interfere with data transmission in the first slot, thereby ensuring reliability of data transmission.

In a possible implementation, if the resource selection window includes a slot reserved for transmitting the second reference signal, the slot reserved for transmitting the second reference signal is used as the first slot.

According to the foregoing method, the slot reserved for transmitting the second reference signal is preferentially selected as the first slot, so that resource utilization can be improved, and an entire slot is not occupied by an excessive quantity of resources to send a reference signal.

In a possible implementation, the method further includes: determining at least one first resource, where the at least one first resource is located in the first slot, and the first resource is used to carry the first reference signal; and sending second indication information, where the second indication information indicates the at least one first resource.

In a possible implementation, the method further includes: sending at least one first reference signal on the at least one first resource.

In a possible implementation, the method further includes: sending third indication information, where the third indication information indicates a second resource, and the second resource is used to transmit a measurement result of the first reference signal.

In a possible implementation, the method further includes: sending fourth indication information in the first slot, where the fourth indication information indicates a second slot for transmitting the first reference signal.

According to the foregoing method, in a process of sending the reference signal in the first slot, a slot for sending the first reference signal next time is indicated, to implement continuous resource reservation.

In a possible implementation, the method further includes: sending fifth indication information, where the fifth indication information indicates the first slot and/or the second slot, and the second slot is used to transmit the first reference signal.

According to the foregoing method, the slot in which the first reference signal is located is repeatedly indicated a plurality of times, thereby increasing an opportunity for a receive end that measures the first reference signal to determine the first slot, and improving robustness.

In a possible implementation, the first indication information is located in sidelink control information SCI or a media access control MAC control element CE.

In a possible implementation, before sending the first reference signal in the first slot, the method further includes: determining that the following condition is met:

$$\sum_{i \geq k} CR_{data}(i) + CR_{beam,subch} \leq CR_{Limit}(k)$$

$CR_{data}(i)$ represents a channel occupancy ratio CR for physical sidelink shared channel PSSCH transmission with a priority i in sidelink control information SCI from another terminal device, $CR_{Limit}(k)$ is determined based on a priority k and a channel busy ratio CBR of a first window, k is predefined, preconfigured, or network-configured, and $CR_{beam,subch}$ represents a ratio of a quantity of subchannels occupied by the first reference signal that is already transmitted in the first window and a quantity of subchannels occupied by the first reference signal that is to be transmitted in a second window to a total quantity of subchannels in the first window, where an index range of a slot included in the first window is [y-a, y-1], an index range of a slot included in the second window is [y, y+b], a slot y is a slot for sending the first reference signal, and a and b are predefined, preconfigured, or network-configured.

According to the foregoing method, a quantity of resources occupied for sending the first reference signal is limited, to avoid channel congestion and ensure a quantity of available resources for data transmission.

In a possible implementation, before sending the first reference signal in the first slot, the method further includes: determining that the following condition is met:

$$CR_{beam,slot} = \frac{S}{S_{total}} \leq CR_{thr} \ \text{or} \ CR_{beam,slot} \leq CR_{Limit}$$

$CR_{thr}$ is predefined, preconfigured, or network-configured, $CR_{Limit}$ is determined based on a channel busy ratio CBR of a first window, S represents a sum of a quantity of slots occupied by the first reference signal that is already transmitted in the first window and a quantity of slots occupied by the first reference signal that is to be transmitted in a second window, and $S_{total}$ represents a total quantity of slots in the first window, where an index range of a slot included in the first window is [y-a, y-1], an index range of a slot included in the second window is [y, y+b], a slot y is a slot for sending the first reference signal, and a and b are predefined, preconfigured, or network-configured.

According to the foregoing method, a quantity of resources occupied for sending the first reference signal is limited, to avoid channel congestion and ensure a quantity of available resources for data transmission.

According to a second aspect, a first communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The method includes: receiving first indication information from a first terminal device, where the first indication information indicates a first slot for transmitting a first reference signal, the first slot is a slot in a resource selection window, the resource selection window includes at least one slot, and the first slot is an unreserved slot, or the first slot is a slot reserved for transmitting a second reference signal; and measuring at least one first reference signal in the first slot.

In a possible implementation, the method further includes: receiving second indication information, where the second indication information indicates at least one first resource, and the at least one first resource is located in the first slot; and receiving the at least one first reference signal on the at least one first resource.

In a possible implementation, the method further includes: transmitting a measurement result of the first reference signal on a second resource, where the second resource is indicated by third indication information, or the second resource is preconfigured or preset.

In a possible implementation, the method further includes: receiving fourth indication information in the first slot, where the fourth indication information indicates a second slot for transmitting the first reference signal; and receiving and measuring the first reference signal in the second slot.

In a possible implementation, the first indication information is located in sidelink control information SCI or a media access control MAC control element CE.

According to a third aspect, a first communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The method includes: receiving first indication information from a first terminal device, where the first indication information indicates a first slot for transmitting a first reference signal, the first slot is a slot in a resource selection window, the resource selection window includes at least one slot, and the first slot is an unreserved slot, or the first slot is a slot reserved for transmitting a second reference signal; and excluding, when selecting a resource, all resources included in the first slot.

According to a fourth aspect, a first communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The method includes: using, in a resource selection window, a slot that meets a first condition as a first slot for transmitting a first reference signal, where the resource selection window includes at least one slot, and the first condition includes at least one of the following: A quantity of reserved resources in the slot is less than or equal to a first quantity, and a priority of data corresponding to a reserved resource in the slot is less than or equal to a first priority; and sending first indication information, where the first indication information indicates the first slot.

According to a fifth aspect, this application further provides a communication apparatus. The communication apparatus can implement any method according to any one of the first aspect to the fourth aspect. The communication apparatus may be implemented by hardware, or may be implemented by executing corresponding software by hardware. The hardware or software includes one or more units or modules corresponding to the foregoing functions.

In a possible implementation, the communication apparatus includes a processor. The processor is configured to support the communication apparatus in performing a corresponding function of the network device, the terminal device, or a core network device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal device.

In a possible implementation, the communication apparatus includes corresponding functional modules configured to implement the steps in the foregoing method. The function may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to descriptions in the method provided in any one of the first aspect to the fourth aspect. Details are not described herein.

According to a sixth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement a functional module of the method according to any possible implementation of any one of the first aspect to the fourth aspect by using a logic circuit or by executing a computer program or instructions. Optionally, the communication apparatus further includes a memory, and the memory is configured to store a computer program or instructions.

According to a seventh aspect, a computer-readable storage medium is provided. The computer-readable storage medium stores a computer program or instructions. When the computer program or the instructions are executed by a processor, the method according to any possible implementation of any one of the first aspect to the fourth aspect is implemented.

According to an eighth aspect, a computer program product storing instructions is provided. When a computer reads and executes the computer program product, the method according to any possible implementation of any one of the first aspect to the fourth aspect is implemented.

According to a ninth aspect, a circuit is provided. The circuit is configured to perform the method according to any possible implementation of any one of the first aspect to the fourth aspect, and the circuit may include a chip circuit. Optionally, the circuit may be further coupled to a memory.

According to a tenth aspect, a chip is provided. The chip includes a processor. When executing a computer program or instructions, the processor is configured to implement the method according to any possible implementation of any one of the first aspect to the fourth aspect. Optionally, the chip may further include a memory. The chip may include a chip, or may include a chip and another discrete device.

According to an eleventh aspect, a communication apparatus is provided, including a processor. The processor implements the method according to any possible implementation of any one of the first aspect to the fourth aspect by using a logic circuit or by executing a computer program or instructions.

According to a twelfth aspect, a communication apparatus is provided, including a unit or a module configured to perform the method according to any possible implementation of any one of the first aspect to the fourth aspect.

According to a thirteenth aspect, an embodiment of this application provides a communication system. The communication system includes a first terminal device configured to implement the method according to the first aspect and any one of the possible implementations of the first aspect, and a third terminal device configured to implement the method according to the second aspect and any one of the possible implementations of the second aspect.

BRIEF DESCRIPTION OF DRAWINGS

FIG. 1 is a diagram of a network architecture applicable to an embodiment of this application;
FIG. 2 is a diagram of a network architecture applicable to an embodiment of this application;
FIG. 3 is a diagram of a network architecture applicable to an embodiment of this application;
FIG. 4 is a diagram of a structure of a network device according to an embodiment of this application;
FIG. 5 is a diagram of beam sweeping according to an embodiment of this application;
FIG. 6 is a schematic flowchart of a communication method according to an embodiment of this application;
FIG. 7 is a diagram of a resource selection window according to an embodiment of this application;
FIG. 8A and FIG. 8B are diagrams of a resource set according to an embodiment of this application;
FIG. 9 is a diagram of slots included in a resource selection window according to an embodiment of this application;
FIG. 10 is a diagram of a first slot according to an embodiment of this application;
FIG. 11A and FIG. 11B are diagrams of transmission of a first reference signal according to an embodiment of this application;
FIG. 12A and FIG. 12B are diagrams of excluded resources according to an embodiment of this application;
FIG. 13 is diagram of resource selection according to an embodiment of this application;
FIG. 14 is a schematic flowchart of a communication method according to an embodiment of this application;
FIG. 15 is a diagram of a structure of a communication apparatus according to an embodiment of this application;
FIG. 16 is a diagram of a structure of a communication apparatus according to an embodiment of this application; and
FIG. 17 is a diagram of a structure of a communication apparatus according to an embodiment of this application.

DESCRIPTION OF EMBODIMENTS

A communication method provided in embodiments of this application may be applied to long term evolution (long term evolution, LTE) or a 5th generation (5th generation, 5G) communication system, for example, 5G new radio (new radio, NR), or may be applied to various future communication systems, for example, a 6th generation (6th generation, 6G) communication system. The communication method provided in embodiments of this application may be further applied to fields such as vehicle-to-everything (vehicle-to-everything, V2X) communication, an internet of vehicles, autonomous driving, and assisted driving.

Particularly, the technical solutions in embodiments of this application may be further applied to fields such as vehicle-to-everything (vehicle-to-everything, V2X) communication, cellular vehicle-to-everything (cellular vehicle-to-everything, C-V2X) communication, an internet of vehicles, autonomous driving, and assisted driving. C-V2X is a V2X communication technology developed based on a cellular system. It uses and enhances functions and elements of a current cellular network, to implement low-latency and high-reliability communication between various nodes in a vehicle network, including vehicle-to-vehicle (vehicle-to-vehicle, V2V) communication, vehicle-to-pedestrian (vehicle-to-pedestrian, V2P) communication, vehicle-to-infrastructure (vehicle-to-infrastructure, V2I) communication, and vehicle-to-network (vehicle-to-network, V2N) communication. With the evolution of the cellular system from 4G LTE to 5G NR, C-V2X also evolves from LTE-V2X to NR-V2X.

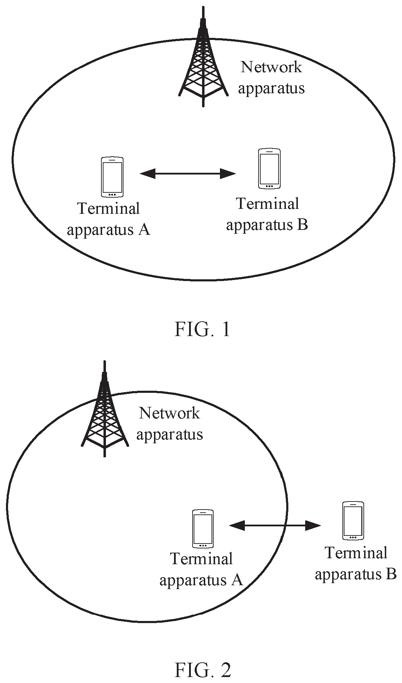

For ease of understanding embodiments of this application, communication systems shown in FIG. 1 to FIG. 3 are first used as examples to describe in detail a communication system applicable to embodiments of this application. This application is applied to a communication system that supports sidelink communication, and supports in-coverage and out-of-coverage communication scenarios. A sidelink may also be referred to as a side link, and is referred to as a sidelink in this application.

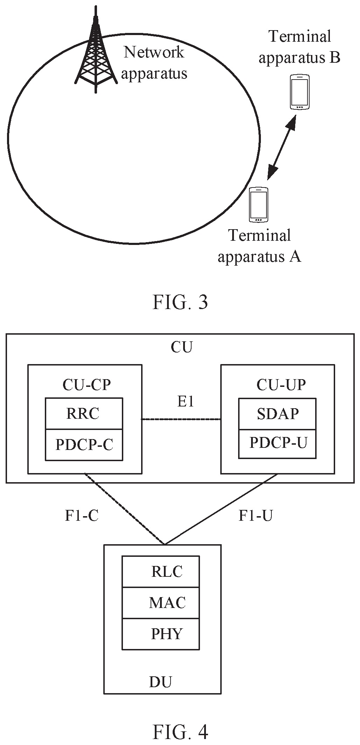

As shown in FIG. 1 to FIG. 3, the communication system may include a plurality of terminal apparatuses (for example, a terminal apparatus A and a terminal apparatus B), and optionally, further include a network apparatus. In FIG. 1, both the terminal apparatus A and the terminal apparatus B are within signal coverage of the network apparatus. In FIG. 2, the terminal apparatus A is within the signal coverage of the network apparatus, but the terminal apparatus B is outside the signal coverage of the network apparatus. In FIG. 3, both the terminal apparatus A and the terminal apparatus B are outside the signal coverage of the network apparatus. The terminal apparatus A and the terminal apparatus B in FIG. 1 and FIG. 2 may communicate with each other on a sidelink using resources scheduled by the network apparatus, where the resource may be a licensed resource or a licensed frequency band. Alternatively, the terminal apparatus A and the terminal apparatus B may autonomously select resources, that is, select resources for sidelink communication from a resource pool, where the resource is an unlicensed resource or an unlicensed frequency band. Both the terminal apparatus A and the terminal apparatus B in FIG. 3 are outside the signal coverage of the network apparatus, so that the terminal apparatuses can communication with each other on a sidelink only by autonomously selecting resources.

In embodiments of this application, the network device may be a device in a wireless network, and the network device may also be referred to as a network apparatus, a radio access network device, or an access network device. For example, a network device may be a radio access network (radio access network, RAN) node that connects a terminal device to the wireless network, and may also be referred to as an access network device. The network device includes but is not limited to: a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, or an access node in a wireless fidelity (wireless fidelity, Wi-Fi) system; or may be a module or unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station, may be a micro base station or an indoor base station, or may be a relay node, a donor node, or the like. A specific technology and a specific device form that are used for the network device are not limited in this application.

As shown in FIG. 4, in some implementations, the network device may include a central unit (central unit, CU) and a distributed unit (distributed unit, DU). A RAN device including a CU node and a DU node separates protocol layers of a gNB in an NR system. Functions of some protocol layers are controlled by the CU in a centralized manner. Functions of some or all remaining protocol layers are distributed in the DU, and the CU controls the DU in a centralized manner. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (namely, PDCP-C). The PDCP-C is mainly responsible for data encryption and decryption, integrity protection, data transmission, and the like on the control plane. The CU-UP is responsible for a user plane function, mainly including a service data adaptation protocol (service data adaptation protocol, SDAP) and a PDCP corresponding to the user plane (namely, PDCP-U). The SDAP is mainly responsible for processing data of the core network and mapping a flow (flow) to a bearer. The PDCP-U is mainly responsible for data plane encryption and decryption, integrity protection, header compression, sequence number maintenance, data transmission, and the like. The CU-CP and the CU-UP are connected through an E1 interface. The CU-CP, on behalf of the gNB, is connected to the core network through an NG interface and connected to the DU through an F1 interface-control plane (namely, F1-C). The CU-UP is connected to the DU through an F1 interface-user plane (namely, F1-U). It is clear that, in another possible implementation, the PDCP-C is alternatively in the CU-UP.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application. The network device may further include an active antenna unit (active antenna unit, AAU). The CU implements a part of functions of the gNB, and the DU implements a part of functions of the gNB. For example, the CU is responsible for processing a non-real-time protocol and service, to implement functions of an RRC layer. The DU is responsible for processing a physical layer protocol and a real-time service, and implementing functions of a radio link control (radio link control, RLC) layer, a media access control (media access control, MAC) layer, and a physical (physical, PHY) layer. In some deployments, the CU may be further divided into a central unit control plane (CU-CP) node and a central unit user plane (CU-UP) node. The CU-CP is responsible for a control plane function, and the CU-UP is responsible for a user plane function.

The terminal device in embodiments of this application may be a wireless terminal apparatus that can receive scheduling and indication information from the network apparatus. The terminal device may be referred to as a terminal apparatus, and may also be referred to as user equipment (user equipment, UE), a mobile station (mobile station, MS), a mobile terminal (mobile terminal, MT), or the like. The terminal apparatus may be a device that includes a wireless communication function (providing voice/data connectivity to a user), for example, a handheld device, a vehicle-mounted device, or a vehicle-mounted module that has a wireless connection function. Currently, some examples of the terminal apparatus are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self-driving (self-driving), a wireless terminal in remote medical surgery (remote medical surgery), a wireless terminal in a smart grid (smart grid), a wireless terminal in transportation security (transportation safety), a wireless terminal in a smart city (smart city) or a wireless terminal in a smart home (smart home), a device-to-device (device-to-device, D2D) communication terminal apparatus, a vehicle-to-everything (vehicle-to-everything, V2X) communication terminal apparatus, an intelligent vehicle, an in-vehicle infotainment system (or referred to as a vehicle-mounted sending unit) (telematics box, T-box), a machine-to-machine/machine-type communication (machine-to-machine/machine-type communication, M2M/MTC) terminal apparatus, an internet of things (internet of things, IoT) terminal apparatus, and the like. For example, the terminal apparatus may be a vehicle-mounted device, an entire vehicle device, a vehicle-mounted module, a vehicle, an on board unit (on board unit, OBU), a roadside unit (roadside unit, RSU), a T-box, a chip, a system on chip (system on chip, SoC), or the like. The chip or the SoC may be mounted in a vehicle, an OBU, an RSU, or a T-box. The wireless terminal in industrial control may be a camera, a robot, or the like. The wireless terminal in the smart home may be a television, an air conditioner, a sweeper, a speaker, a set-top box, or the like. The terminal device may alternatively be a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a roadside unit (roadside unit, RSU). The terminal device may alternatively be a device in device to device (device to device, D2D) communication, for example, an electricity meter or a water meter. In addition, the terminal device in embodiments of this application may alternatively be a terminal device in an IoT system. An IoT is an important part of future development of information technologies, and is mainly technically characterized in that things are connected to networks by using communication technologies, to implement intelligent networks of human-machine interconnection and interconnection between things.

In this application, predefined content is usually defined in a standard, does not need to be configured by another device, and is information recorded/written in advance in hardware and/or software of the terminal apparatus, or may be understood as information that cannot be changed by the network apparatus or another terminal apparatus. Pre-configured content is usually information recorded/written in advance in hardware and/or software of the terminal apparatus, is determined by a factory device vendor, and may be changed by software or hardware.

A (pre-) configuration may be classified into a network apparatus (pre-) configuration and a terminal apparatus (pre-) configuration. If a (pre-) configuration is a network apparatus (pre-) configuration, the (pre-) configuration may be performed based on a system information block (system information block, SIB) or RRC signaling. If a (pre-) configuration is a terminal apparatus (pre-) configuration, the (pre-) configuration may be performed based on PC5-RRC signaling.

Beam management is an important technology proposed for an FR2 in an NR system, is a process in which a network device and a terminal device obtain and maintain a beam set for sending and receiving, and is a reference workflow for beamforming in a multiple input multiple output (multiple input multiple output, MIMO) system. A frequency range of an FR1 is 410 MHz to 7125 MHz, and a frequency range of the FR2 is 24250 MHz to 52600 MHz.

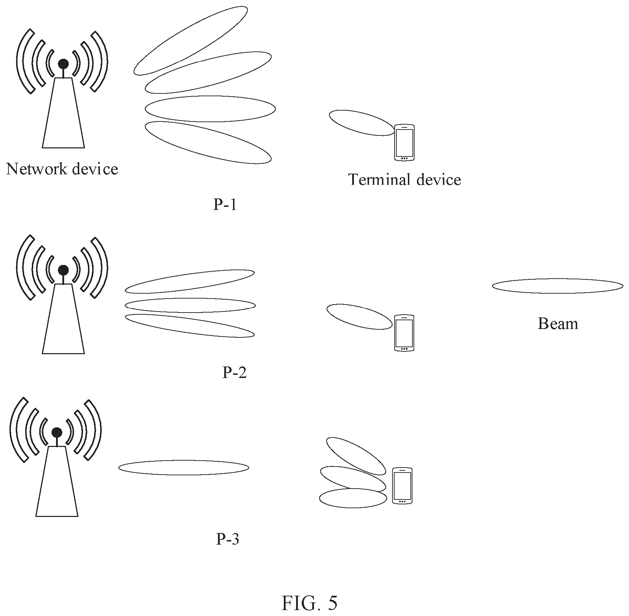

Beam management can be classified into three states based on an operating status. As shown in FIG. 5, operations in each state are summarized as follows:

P-1: The terminal device measures a first set of transmit beams of the network device (beams in the first set of transmit beams are wide beams) and selects a transmit beam of the network device and a receive beam of the terminal device.
P-2: Based on P-1, the terminal device measures a second set of transmit beams (beams in the second set of transmit beams are fine beams), to improve a transmit beam of the BS.
P-3: The terminal device measures a transmit beam of a same network device by using different receive beams, to improve the receive beam of the terminal device.

Based on the foregoing operations in three states, downlink beam management is performed, and a basic procedure of the downlink beam management is as follows:
The network device configures a maximum of 64 beam directions, where each beam direction corresponds to one synchronization signal block (Synchronization Signal Block, SSB) and a time-frequency resource used by the terminal device for beam reporting. The network device sequentially sends SSBs to all beam directions through sweeping, and each beam direction corresponds to one SSB. The terminal device performs beam measurement to obtain a reference signal received power (Reference Signal Received Power, RSRP) of the SSB. Then, the terminal device selects an SSB set by comparing RSRPs, and reports, to the base station on a given time-frequency resource, sequence numbers of SSBs in the set and corresponding RSRPs. The base station performs beam determining based on the reported information.

Further, to implement transmit beam training in the P-2 operating state, the network device allocates $K\_S$ channel state information reference signal (Channel State Information Reference Signal, CSI-RS) resources to $K\_S$ transmit beams, and then sends these CSI-RS resources through periodic beam sweeping. Each beam direction corresponds to one CSI-RS resource. In these CSI-RS resources, a maximum quantity of CSI-RS ports is 2, and other uncertain resource mapping information needs to be configured by the network device and indicated to the terminal device by using RRC signaling. The network device sends a CSI-RS resource only in a single beam direction at any given moment. The terminal device performs beam measurement to obtain a CSI-RS reference signal received power RSRP, and obtains a CSI-RS reference signal resource indicator (CSI-RS Resource Indicator, CRI). After measuring the RSRP, the terminal device selects one or more RSRP values and corresponding CRIs through comparison, and reports the selected RSRP values and corresponding CRIs to the network device on a given time-frequency resource. The network device determines, based on the reported information, a transmit beam that should be used.

A similar procedure is used for uplink beam management, but different reference signals are used.

If the foregoing beam management procedure is also used between terminal devices on a sidelink to determine transmit beams for sending signals to each other, in an SL resource pool, sending beams in different directions in a single slot causes an automatic gain control (auto gain control, AGC) problem: The SL performs AGC over an entire frequency range on a $1^{st}$ symbol of a slot to adjust received signal strength, to ensure data reception in the entire slot (a transmit power does not change in the entire slot); and in an SL FR2, if the terminal device performs beam sweeping in a plurality of beam directions in one slot, a change in a beam direction causes a receive power of the receiving terminal device to rapidly change in one slot. Consequently, AGC of a $1^{st}$ symbol cannot ensure signal receiving in an entire slot. Therefore, in a resource pool, resource multiplexing between beam sweeping and data transmission affects data transmission. Therefore, this application provides a method, for resolving the foregoing problem. Details are described below.

In embodiments of this application, a function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and a smart city. A function of the terminal device may alternatively be performed by a module (for example, a chip or a modem) in the terminal device, or may be performed by an apparatus including the function of the terminal device.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

When the method provided in this application is applied to the systems in FIG. 1 to FIG. 3, the method provided in embodiments of this application may be implemented by the terminal apparatus or the modules in the terminal apparatus in FIG. 1 to FIG. 3.

It may be understood that a specific structure of an execution body of the method provided in embodiments of this application is not particularly limited in this application. The method performed by the terminal device may be applied to the terminal device or the module in the terminal device, and the method performed by the network device may be applied to the network device or the module in the network device, provided that a program that records code of the method provided in embodiments of this application can be run to perform communication according to the method provided in embodiments of this application. The following uses interaction between a first terminal device, a second terminal device, and a third terminal device as an example for description.

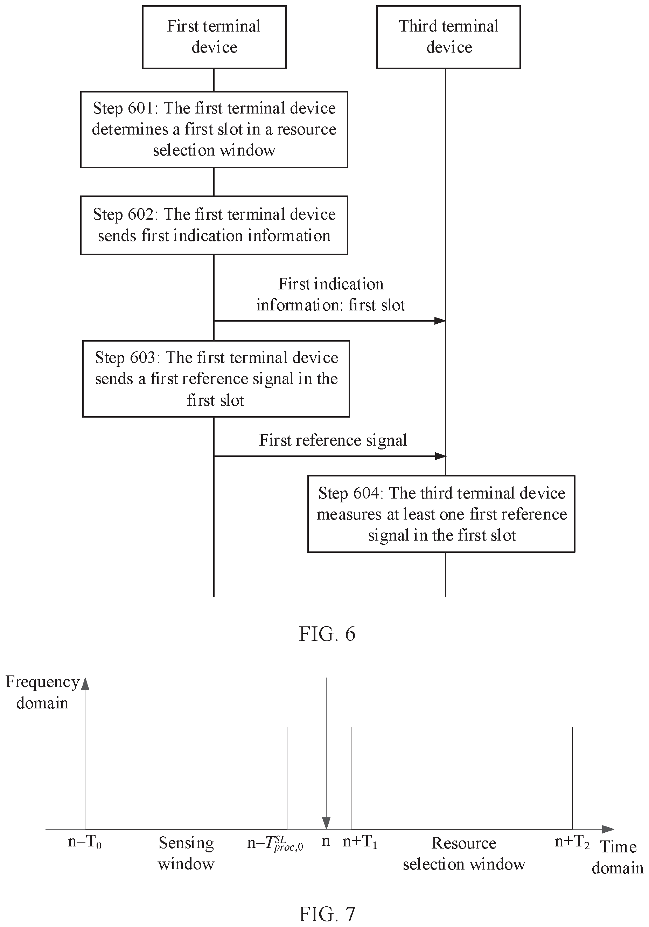

FIG. 6 is a schematic flowchart of a communication method according to an embodiment of this application. The method includes the following steps.

Step 601: A first terminal device determines a first slot in a resource selection window.

The first slot is used to transmit a first reference signal, the resource selection window includes at least one slot, and the first slot is one slot in the resource selection window. In this application, the slot may be replaced with descriptions such as a "resource" or a "time domain resource". Herein, the slot is merely used as an example, and other cases are not described.

In this application, each first reference signal transmitted by the first terminal device in the first slot corresponds to one beam direction, and a beam is a main lobe of a radiation pattern of a signal. First reference signals in different beam directions have different transmission directions and different coverage. In an implementation, the first terminal device may send a plurality of first reference signals in the first slot, and each first reference signal corresponds to a different beam direction. The first slot may also be a slot for beam sweeping.

The first terminal device may determine, in the resource selection window, a plurality of slots for transmitting the first reference signal. For example, the first terminal device may further determine a second slot. A quantity of slots for transmitting the first reference signal in the resource selection window is not limited.

In this application, the reference signal may be a de-modulation reference signal (de-modulation reference signal, DMRS) or a CSI-RS, or may be a reference signal of another type. This is not limited in this application.

How to determine the resource selection window (resource selection window, RSW) is not limited in this application. For example, under network coverage, the first terminal device may obtain SL resource pool (resource pool) configuration information and/or SL bandwidth part (bandwidth part, BWP) configuration information by receiving a system information block (system information block, SIB), cell-specific (cell-specific) radio resource control (radio resource control, RRC) signaling, or user equipment-specific (UE-specific) RRC signaling of a network device. Alternatively, the first terminal device may use preconfigured SL resource pool configuration information or SL BWP configuration information. The SL BWP configuration information may include SL resource pool information that is for configuring a quantity of resource pools included in a BWP. The SL BWP configuration information may include SL bandwidth information that indicates a size of a bandwidth for SL communication, for example, indicates that an SL bandwidth is 20 megahertz (MHz).

After determining an SL resource pool, the first terminal device may determine the resource selection window in the SL resource pool. For example, the first terminal device triggers mode (mode) 2 resource allocation in a slot n, and performs sensing (sensing) and resource selection to determine a time-frequency resource for sending the first reference signal. As shown in FIG. 7, specific steps are as follows:

Step 1: The first terminal device determines the resource selection window [n+$T_1$, n+$T_2$].

Each candidate resource $R_{x,y}$ in the resource selection window is defined by one slot in time domain and $L_{subCH}$ contiguous subchannels in frequency domain. One slot includes a plurality of orthogonal frequency division multiplexing (orthogonal frequency division multiplexing, OFDM) symbols, for example, may include 14 OFDM symbols; and one subchannel includes a plurality of physical resource blocks (resource blocks, RBs). $0 \leq T_1 \leq T_{proc,1}^{SL}$. $T_{proc,1}^{SL}$ is determined based on Table 1, and may represent a latency of processing resource selection and reference signal sending by a terminal apparatus at a transmit end; $\mu_{SL}$ is a configured subcarrier spacing, and may be a subcarrier spacing of the SL resource pool; and a value of $T_1$ is not limited, $T_1$ is an integer greater than 0, and $T_1$ may be determined by the first terminal device, preset, preconfigured, or configured by the network device. This specifically depends on an implementation. If $T_{2min}$, (a value of the parameter is configured by a higher layer) is less than a remaining packet delay budget (packet delay budget, PDB), $T_{2min} \leq T_2 \leq PDB$ (packet delay budget), where a value of $T_2$ is not limited, $T_2$ is an integer greater than $T_1$, and $T_2$ may be determined by the first terminal device, preset, preconfigured, or configured by the network device. This specifically depends on an implementation. If $T_{2min}$ is greater than or equal to the remaining PDB, $T_2$ is equal to the remaining PDB. $L_{subCH}$ may be determined by the first terminal device, preset, preconfigured, or configured by the network device.

For example, as shown in Table 1, $T_{proc,1}^{SL}$ and $\mu_{SL}$ are in a one-to-one correspondence:

Table 1

| $\mu_{SL}$ | $T_{proc,1}^{SL}$ (unit: slot) |
|---|---|
| 0 | 3 |
| 1 | 5 |
| 2 | 9 |
| 3 | 17 |

Step 2: The first terminal device determines a sensing window (sensing window). For example, the sensing window is represented as $[n - T_0, n - T_{proc,0}^{SL})$.

In this application, $T_{proc,0}^{SL}$ indicates a latency of processing a sensing result by the first terminal device. Specifically, $T_{proc,0}^{SL}$ may be a quantity of slots for processing the sensing result by the first terminal device. $T_0$ is a positive integer.

Optionally, $T_{proc,0}^{SL}$, $T_0$, or both are related to the subcarrier spacing $\mu_{SL}$. For example, as shown in Table 2, $T_{proc,0}^{SL}$ and $\mu_{SL}$ are in a one-to-one correspondence:

Table 2

| $\mu_{SL}$ | $T_{proc,0}^{SL}$ (unit: slot) |
|---|---|
| 0 | 1 |
| 1 | 1 |
| 2 | 2 |
| 3 | 4 |

It should be understood that step 1 and step 2 are not subject to a specific sequence.

Step 3: The first terminal device determines a reference signal received power (reference signal received power, RSRP) threshold $Th(p_i, p_j)$.

The RSRP threshold is related to a priority $prio_{TX}$ of a reference signal to be sent by the first terminal device, and is further related to a priority $prio_{RX}$ indicated by received sidelink control information (Sidelink Control Information, SCI). The RSRP threshold may be specifically an RSRP threshold corresponding to a $(prio_{RX} + (prio_{TX} - 1) * 8)^{th}$ index (index) in an RSRP threshold set configured for a resource pool. The RSRP threshold may be in a unit of decibels (dB).

Step 4: The first terminal device initializes a set $S_A$ of available resources. The initialized $S_A$ may be a set of all time-frequency resource units in the resource selection window.

Step 5: When any of the following conditions are met, a corresponding resource is excluded from $S_A$:

(a) A slot that is reserved for all periodic resources configured in a resource pool and that corresponds to a slot not sensed by the first terminal device in the sensing window is excluded. For example, the slot is a slot in which the first terminal device is in a sending state. Due to a limitation of a half-duplex transceiver, when the first terminal device is in the sending state, the first terminal device cannot perform receiving, and cannot sense the sending slot.

(b) If a resource selection process is used to select a resource for data transmission, all frequency domain resources in a reserved slot in the resource selection window are excluded. The reserved slot may be a slot including a resource reserved by another terminal device, and the reserved resource is reserved by the another terminal device for transmitting a beam sweeping reference signal. The first terminal device may receive, in the sensing window, SCI sent by the another terminal device, and the SCI may indicate a reserved resource. Therefore, the first terminal device may determine, based on the SCI sent by the another terminal device, which slots in the resource selection window are reserved. For example, the first terminal device receives SCI of a third terminal device. The SCI indicates that a resource b in a slot a in the resource selection window is reserved, and the resource b is used to transmit a sidelink beam sweeping reference signal. In this case, the first terminal device may determine that the slot a is reserved, and exclude all resources included in the slot a from $S_A$.

(c) If a resource selection process is used to select a resource for transmitting a beam sweeping reference signal, all frequency domain resources in a reserved slot in the resource selection window are excluded. The reserved slot may be a slot including a resource reserved by another terminal device, and the reserved resource is reserved by the another terminal device for transmitting sidelink data. The first terminal device may receive, in the sensing window, SCI sent by the another terminal device, and the SCI may indicate a reserved resource. Therefore, the first terminal device may determine, based on the SCI sent by the another terminal device, which slots in the resource selection window are reserved. For example, the first terminal device receives SCI of a fourth terminal device. The SCI indicates that a resource d in a slot c in the resource selection window is reserved, and the resource d is used to transmit sidelink data. In this case, the first terminal device may determine that the slot c is reserved, and exclude all resources included in the slot c are from $S_A$ because the resource d is used to transmit the sidelink data.

The condition b and the condition c in step 5 may alternatively be included in step 6. In other words, when a resource is excluded from $S_A$ in step 6, a resource is excluded in the condition b and the condition c in step 5.

Step 5a: If a time-frequency resource excluded from $S_A$ is less than X% of total time-frequency resources in the resource selection window, step 4 and step 5 are performed again. A value of X% is greater than 0. The value of X% may be configured or preconfigured by the network device, for example, X%=20%. This is not limited.

Step 6: When all the following conditions are met, a corresponding resource is excluded from $S_A$:

(a) The received first-stage SCI is successfully decoded.

(b) An RSRP result obtained by performing RSRP measurement on a physical sidelink control channel (physical sidelink control channel, PSCCH) included in a time-frequency resource (including a time-frequency resource periodically reserved for new transmission and/or retransmission of the PSSCH, and a time-frequency resource aperiodically reserved for new transmission and/or retransmission of the PSSCH) reserved by the received first-level SCI for physical sidelink shared channel (physical sidelink shared channel, PSSCH) transmission and on a de-modulation reference signal (de-modulation reference signal, DMRS) of the PSSCH is greater than the RSRP threshold determined in step 3.

(c) Time-frequency resources reserved by the received first-level SCI are in the resource selection window, and include a retransmission resource and a periodically reserved resource that are indicated by the first-level SCI.

Step 7: If a remaining time-frequency resource obtained by excluding a time-frequency resource from $S_A$ is less than X% of the total time-frequency resources in the resource selection window, the RSRP threshold determined in step 3 is increased (by 3 dB each time), and step 4 to step 7 are performed again.

After step 1 to step 7, the first terminal device may determine, from the resource selection window, a slot as the first slot. The first slot does not include a resource excluded from $S_A$. In other words, the first slot is an unreserved slot, or the first slot is a slot reserved for transmitting a second reference signal. In this application, reservation may also be replaced with other terms with similar meanings, such as reserve.

The foregoing step 1 to step 7 are merely examples. In this application, another method may be used to determine the resource set $S_A$. Examples are not provided herein one by one.

In this application, the first slot being an unreserved slot may be understood that no resource in the first slot is reserved by any terminal device or a terminal device around the first terminal device for sidelink data transmission, or may also be understood that no resource in the first slot is reserved by any terminal device or a terminal device around the first terminal device for transmitting information other than sidelink data and a reference signal.

The first slot being a slot reserved for transmitting the second reference signal may be understood that the first slot includes a resource reserved by a second terminal device for transmitting the second reference signal, and the second terminal device is different from the first terminal device.

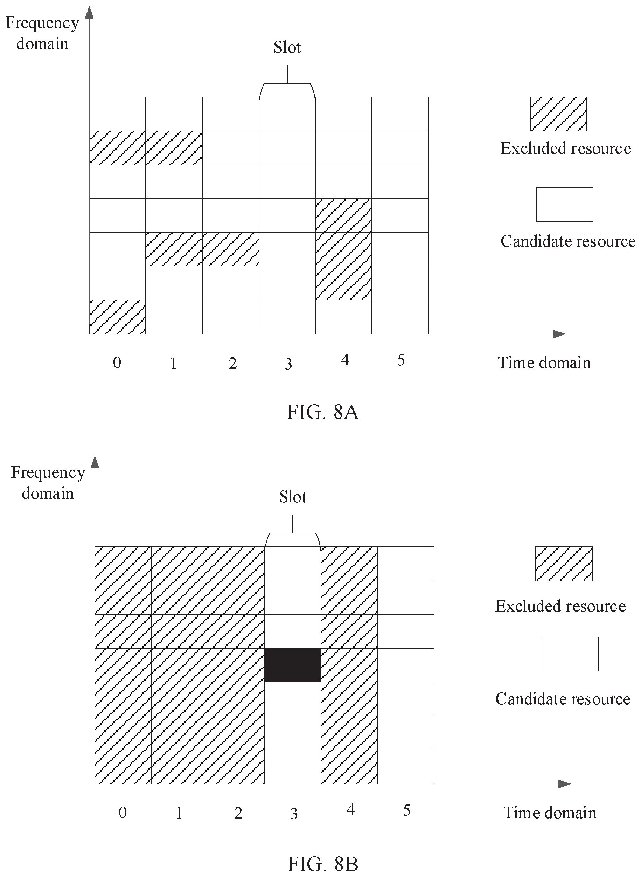

For example, as shown in FIG. 8A, slots included in the resource selection window are numbered from 0, and the resource selection window includes a slot 0 to a slot 5. The first terminal device may determine, based on SCI of another terminal device that is received in the sensing window, a reserved resource in the resource selection window, to exclude a slot including the resource. In the figure, grids filled with diagonal stripes represent the excluded resources, and other resources are candidate resources. If the first terminal device determines that there are no excluded resources in only the slot 3 and the slot 5 in the resource selection window, the slot 3 or the slot 5 may be used as the first slot.

In an implementation, if the resource selection window includes an unreserved slot and further includes a slot reserved for transmitting the second reference signal, the slot reserved for transmitting the second reference signal may be preferentially used as the first slot. For example, the first terminal device may use, as the first slot, the slot reserved for transmitting the second reference signal.

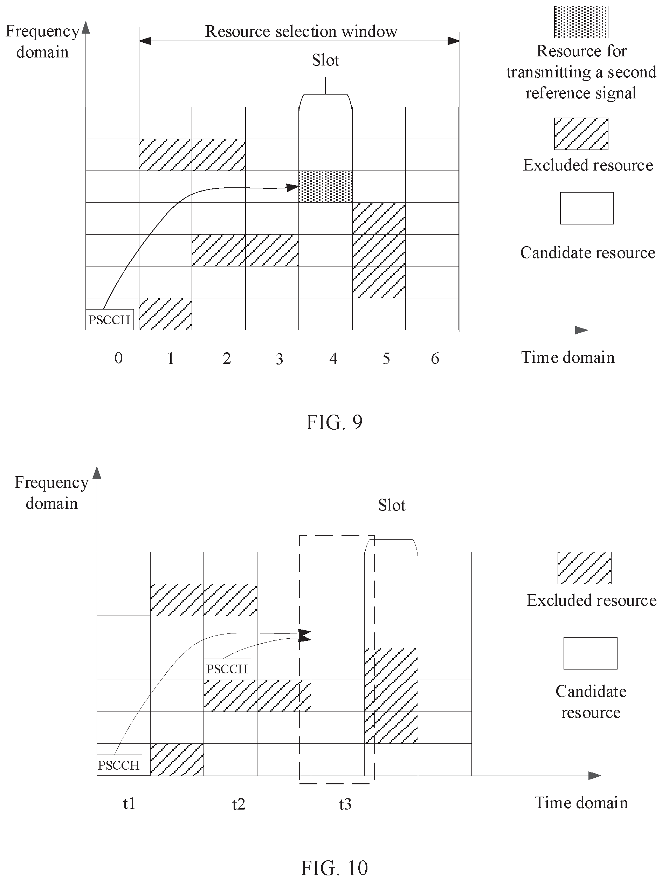

For example, as shown in FIG. 9, slots included in the resource selection window are numbered from 1, and the resource selection window includes a slot 1 to a slot 6. The first terminal device may determine, based on SCI of another terminal device that is received in the sensing window, a reserved resource in the resource selection window, to exclude a slot including the resource. In the figure, grids filled with diagonal stripes represent the excluded resources, and other resources are candidate resources. The first terminal device receives SCI of UE 1 on a PSCCH in a slot 0, and the SCI indicates to reserve, in the slot 3, a resource for transmitting the second reference signal. If the first terminal device determines that there are no excluded resource in only the slot 3 and the slot 5 in the resource selection window, because the slot 3 includes the resource reserved for transmitting the second reference signal, the slot 3 may be used as the first slot.

Further, the terminal device may determine, in the first slot, at least one first resource for carrying the first reference signal, where the at least one first resource is located in the first slot. For example, after the resource set $S_A$ is determined in step 1 to step 7 based on the foregoing descriptions, step 8 may be further performed: The first terminal device randomly selects at least one time-frequency resource $(r_0, r_1, r_2, ...)$ from $S_A$ to send the first reference signal.

Optionally, before sending the first reference signal, the first terminal device performs resource reevaluation on $(r_0, r_1, r_2, ...)$, and after reevaluation, performs preemption detection on a resource ($r'_0, r'_1, r'_2, \cdots$) selected from $S_A$. The first terminal device performs resource reevaluation and preemption detection at a moment of at least a slot $m-T_3 (T_3 = T_{proc,1}^{SL})$. The first terminal device may additionally trigger resource reevaluation and/or preemption detection before and after the slot m-T3 based on an implementation. A method for determining whether $(r_0, r_1, r_2, ...)$ and ($r'_0, r'_1, r'_2, \cdots$) need to be excluded is the same as that in step 1 to step 7. If $r_i$, $r'_i$, or both in $(r_0, r_1, r_2, ...)$ and ($r'_0, r'_1, r'_2, \cdots$) do not belong to $S_A$ (that is, $r_i$ and $r'_i$ are separately excluded during reevaluation and/or preemption detection), $r_i$, $r'_i$, or both are reselected. A slot m is a next slot for sending, that is, the slot m belongs to $(r_0, r_1, r_2, ...)$ and (

$\dot{r}'_0, r'_1, r'_2, \dots$ ).

For example, as shown in FIG. 8B, in the resource selection window, only a resource included in a slot 3 and a resource included in a slot 5 can be used as candidate resources, that is, candidate resources included in the resource set $S_A$ are located in the slot 3 and the slot 5. If the first terminal device selects the slot 3 as the first slot, the first terminal device selects at least one first resource from candidate resources included in the slot 3 to transmit the first reference signal. For example, a candidate resource filled in black in the figure represents a selected candidate resource, and the at least one first resource determined by the first terminal device is located in the candidate resource, or the first terminal device uses the candidate resource as the first resource.

It should be noted that in the foregoing step 1 to step 7, each candidate resource includes one slot in time domain, and includes $L_{subCH}$ contiguous subchannels in frequency domain. When the first resource for transmitting the first reference signal is actually selected, in a possible implementation, the at least one first resource may be selected from one candidate resource. This may be understood as that a granularity of the first resource is smaller than a granularity of the candidate resource. One candidate resource may include a plurality of first resources. For example, one first resource includes e OFDM symbols in time domain, and includes f subchannels in frequency domain, where e is an integer greater than 0 and less than 14, and f is an integer greater than 0 and less than or equal to $L_{subCH}$. In another possible implementation, a size of the first resource may be the same as a size of the candidate resource. To be specific, the first resource includes one slot in time domain, and includes contiguous subchannels in frequency domain. The foregoing is merely an example. There may be another case of the size of the first resource. The size of the first resource is not limited in this application.

In this application, to avoid using excessive resources for transmitting the first reference signal in the SL resource pool, a quantity of resources for transmitting the first reference signal may be further limited based on a channel occupancy ratio (Channel Occupancy Ratio, CR) and/or a channel busy ratio (Channel Busy Ratio, CBR).

In a first possible implementation, before determining the first slot in the resource selection window or sending the first reference signal in the first slot, the first terminal device may further determine that the following condition is met:

$$\sum_{i \geq k} CR_{data}(i) + CR_{beam,subch} \leq CR_{Limit}(k) \quad (1)$$

$CR_{data}(i)$ represents a CR of a PSSCH for transmission at a priority i indicated in SCI from another terminal device, the SCI from the another terminal device is received by the first terminal device in a sensing window, the SCI reserves a resource for transmitting sidelink data, and the priority i may be understood as a priority of sidelink data reserved for transmission in the SCI.

$CR_{Limit}(k)$ is determined based on a priority k and a CBR of a first window, where k is predefined, preconfigured, or network-configured, or is determined by the first terminal device. How to specifically determine $CR_{Limit}(k)$ is not limited in this application. For example, there is a correspondence between $CR_{Limit}(k)$ and, the priority k and the CBR of the first window. A value of $CR_{Limit}(k)$ may be determined based on the priority k, the CBR of the first window, and the correspondence. The correspondence is not limited, and details are not described herein.

The first window may also be referred to as a CR window. An index range of a slot included in the first window is [y-a, y-1]. The CBR represents a channel busy degree in a period of time. The CBR of the first window is obtained by the first terminal device by measuring a ratio of a quantity of subchannels that exceed a received signal strength indicator (Received Signal Strength Indicator, RSSI) threshold in subchannels in [y-a, y-1] to a total quantity of subchannels measured in [y-a, y-1]. The RSSI threshold is predefined, preconfigured, or network-configured, or is determined by the first terminal device. A slot y is a slot for sending the first reference signal. For example, the slot y is the first slot.

In addition, the CR of the first window is defined as a ratio of a quantity of subchannels already transmitted in the CR window [y-a, y-1] and a quantity of subchannels to be transmitted in a second window [y, y+b] to a total quantity of subchannels in the CR window, that is, the following form is met:

$$CR = CR_{data} + CR_{beam,subch} = \frac{CH_{data} + CH_{beam}}{CH_{total}} \quad (2)$$

$CH_{data}$ represents a quantity of subchannels occupied by UE for transmitting data, $CR_{beam,subch}$ represents a quantity of subchannels occupied for transmitting a first parameter signal (that is, beam sweeping) (all subchannels in the SL resource pool in a transmission slot are calculated as a quantity of occupied subchannels), $CH_{data}$ represents a channel occupation status for data transmission, and $CR_{beam,subch}$ represents a channel occupation status for the first parameter signal.

$CR_{beam,subch}$ represents a ratio of a quantity of subchannels occupied by the first reference signal that is already transmitted in the first window and a quantity of subchannels occupied by the first reference signal that is to be transmitted in the second window to a total quantity of subchannels in the first window, an index range of a slot included in the second window is [y, y+b], the second window may also be referred to as a future window, and a and b are predefined, preconfigured, or determined by the first terminal device.

In this implementation, if the foregoing inequality (1) is met, the first terminal device may send the first reference signal in the first slot; or if the foregoing inequality (1) is not met, the first terminal device cannot send the first reference signal in the first slot.

In a second possible implementation, before determining the first slot in the resource selection window or sending the first reference signal in the first slot, the first terminal device may further determine that the following condition is met:

$$CR_{beam,slot} = \frac{S}{S_{total}} \leq CR_{\mathrm{thr}} \ \mathrm{or} \ CR_{beam,slot} \leq \mathrm{CR}_{\mathrm{Limit}} \ (3)$$

$CR_{\mathrm{thr}}$ is predefined, preconfigured, or network-configured, or is determined by the first terminal device. $CR_{\mathrm{Limit}}$ is determined based on the CBR of the first window. How to specifically determine $CR_{\mathrm{Limit}}$ is not limited in this application. For example, there is a correspondence between $CR_{\mathrm{Limit}}$ and the CBR of the first window. A value of $CR_{\mathrm{Limit}}$ may be determined based on the CBR of the first window and the correspondence. The correspondence is not limited, and details are not described herein.

S represents a sum of a quantity of slots occupied by the first reference signal that is already transmitted in the first window and a quantity of slots occupied by the first reference signal that is to be transmitted in the second window, $S_{total}$ represents a total quantity of slots in the first window, an index range of a slot included in the first window is [y-a, y-1], an index range of a slot included in the second window is [y, y+b], and a and b are predefined, preconfigured, or network preconfigured, or is determined by the first terminal device.

In this implementation, if the foregoing inequality (3) is met, the first terminal device may send the first reference signal in the first slot; or if the foregoing inequality (3) is not met, the first terminal device cannot send the first reference signal in the first slot.

Step 602: The first terminal device sends first indication information, where the first indication information indicates the first slot.

The first terminal device may further send second indication information, where the second indication information indicates the at least one first resource for carrying.

The first indication information and the second indication information may be sent by using a same message, or may be sent by using different messages. This is not limited in this application. Optionally, the first indication information may be transmitted over a PSCCH, and the second indication information may also be transmitted over a PSCCH. For example, the first indication information and the second indication information is sent by using SCI. Alternatively, the first indication information may be transmitted over a PSSCH, and the second indication information may also be transmitted over a PSSCH. For example, the first indication information and the second indication information may be sent by using a MAC control element (control element, CE).

For example, the first indication information and the second indication information may be carried in a same piece of SCI or a same MAC control element (control element, CE). If a slot in which the SCI, the MAC CE, or both are located is for initial transmission, the slot cannot be used for beam sweeping. Because there is no reservation information for initial transmission, another terminal device cannot determine in advance whether the slot is used for beam sweeping.

In this application, there may be a plurality of implementations of how to indicate the first slot by the first indication information.

In an implementation, the first indication information may indirectly indicate the first slot. For example, if the first terminal device sends the first indication information by using the SCI or the MAC CE, the first terminal device may indicate the first slot by adding a new field to the SCI or the MAC CE. For example, a 1-bit flag (flag) is added to the SCI or the MAC CE, and a time resource indication value (time resource indication value, TRIV) in the SCI or the MAC CE is used as the first indication information. For example, when flag=1, a retransmission slot indicated by the TRIV in the SCI or the MAC CE is the first slot for transmitting the first reference signal. Alternatively, a resource reservation period (resource reservation period) field in the SCI or the MAC CE is used as the first indication information. For example, when flag=1, a periodic slot indicated by the resource reservation period in the SCI or the MAC CE is the first slot for transmitting the first reference signal.

In another implementation, the first indication information may directly indicate the first slot. For example, the first indication information indicates an offset of the first slot relative to a current slot, or the first indication information indicates a system frame number (system frame number, SFN) or a direct frame number (direct frame number, DFN) corresponding to the first slot. Alternatively, the first indication information may further indicate information such as an index of the first slot.

In this application, the second indication information may further indicate a time domain location (for example, an occupied symbol) and/or a frequency domain location (for example, an occupied physical resource block (resource block, RB)) of each first resource in the at least one first resource in the first slot.

There may be a plurality of implementations of how to indicate the at least one first resource by the second indication information.

Implementation 1: If the first terminal device sends the second indication information by using the SCI or the MAC CE, the second indication information may be located in a frequency resource assignment (frequency resource assignment) field. If the second indication information is located in the frequency resource assignment field, the at least one first resource indicated by the second indication information is an aperiodic transmission resource.

Implementation 2: On a basis of reserving a data transmission resource in the SCI or the MAC CE, the second indication information indicating the at least one first resource is separately configured. In a possible manner, in frequency domain, the second indication information indicates a subchannel occupied by the at least one first resource.

Implementation 3: A resource reservation field in the SCI or the MAC CE is reused as the second indication information, and an identifier field is added to indicate whether a resource indicated by the resource reservation field is used to transmit data or transmit a reference signal. For example, time-frequency resources R1 and R2 are indicated in the SCI, and R1 and R2 correspond to 1-bit identification information respectively. If the identification information of R1 is 1, R1 is used for beam sweeping; or if the identification information of R2 is 0, R1 is used for data transmission.

In this application, the first terminal device may further send third indication information, where the third indication information indicates a second resource, and the second resource is used to transmit a measurement result of the first reference signal. The third indication information and the first indication information or the second indication information may be sent by using a same message, or may be sent by using different messages. This is not limited in this application. If a resource for transmitting the measurement result of the first reference signal is preset, for example, there is a preset mapping relationship between the first slot and the second resource, the first terminal device may not send the third indication information.

In this application, after sending the first indication information, the first terminal device may further repeatedly indicate the first slot. For example, the first terminal device may further send fifth indication information, where the fifth indication information indicates the first slot and/or the second slot, and the second slot is also used to transmit the first reference signal. The method can avoid a case in which a slot in which the first reference signal is located cannot be determined because the third terminal device that measures the first reference signal cannot receive the first indication information due to a half-duplex problem or a resource conflict.

For example, as shown in FIG. 10, the first terminal device sends the first indication information over a PSCCH in a slot t1, where the first indication information indicates that a slot t3 is used to transmit the first reference signal; and the first terminal device further sends the second indication information over a PSCCH in a slot t2, where the second indication information indicates that the slot t3 is used to transmit the first reference signal.

In this application, after sending the second indication information, the first terminal device may further repeatedly indicate the at least one first resource, for example, repeatedly send the second indication information in different resources. A specific process is not limited.

In this application, the first slot and/or the at least one first resource may alternatively be indicated by a terminal device other than the first terminal device. For example, the UE 1 sends the first indication information. After UE a receives the first indication information of the UE 1 and determines the first slot, the UE a may indicate, in SCI or a MAC CE sent by the UE a, the first slot that is reserved by the UE 1 and that is used to transmit the first reference signal. Alternatively, the UE a may indicate, in SCI or a MAC CE sent by the UE a, the at least one first resource that is reserved by the UE 1 and that is used to transmit the first reference signal. How the UE a specifically indicates the first slot and/or the at least one first resource is not limited in this application. For details, refer to the foregoing descriptions. Another method may also be used. Details are not described herein.

Step 603: The first terminal device sends the first reference signal in the first slot.

Specifically, the first terminal device may send at least one first reference signal on the at least one first resource in the first slot. Each first reference signal corresponds to one beam direction.

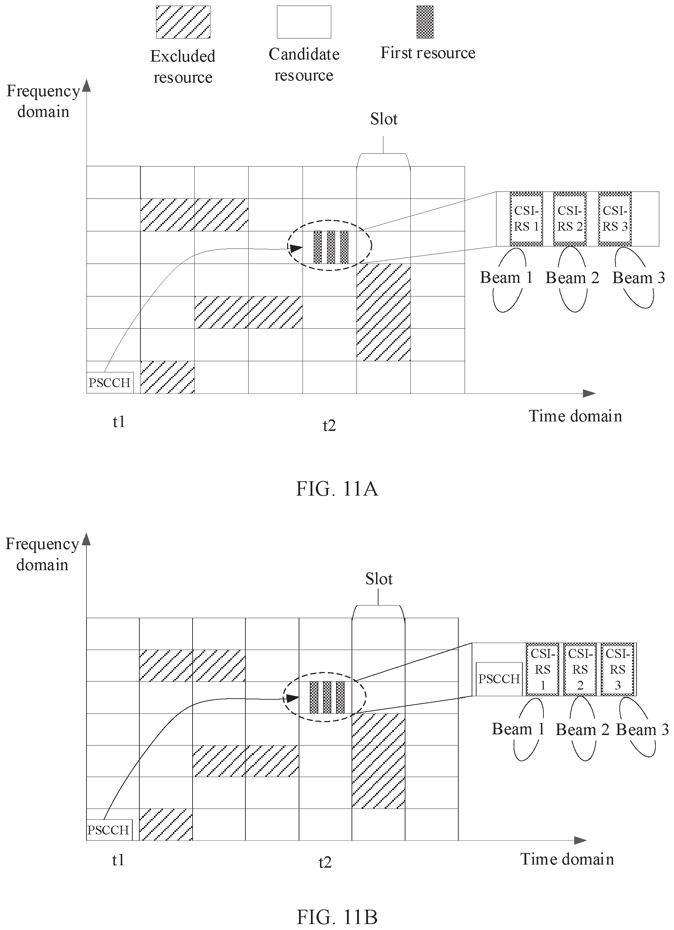

For example, as shown in FIG. 11A, the first terminal device sends the first indication information and the second indication information over a PSSCH in a slot t1, the first indication information indicates that a slot t2 is used to transmit the first reference signal, and the second indication information indicates a specific location of the at least one first resource in the first slot. When the first terminal device sends the first reference signal in the slot t2, the slot t2 may not include a PSCCH/PSSCH/physical sidelink feedback channel (physical sidelink feedback channel, PSFCH), and is used to transmit only the first reference signal. In the figure, an example in which the first reference signal is a CSI-RS is used. The first reference signal may alternatively be another type of reference signal. It is assumed that the first terminal device sends one CSI-RS on each of three first resources included in the slot t2, and sends three CSI-RSs in total, namely, a CSI-RS 1 to a CSI-RS 3. Each CSI-RS corresponds to one beam, the CSI-RS 1 corresponds to a beam 1, the CSI-RS 2 corresponds to a beam 2, and the CSI-RS 3 corresponds to a beam 3. Beam directions of different beams are different. A quantity of first reference signals sent by the first terminal device in one slot and a beam direction of each first reference signal are not limited in this application. Details are not described herein.

In this application, the first terminal device may send fourth indication information in the first slot, and the fourth indication information indicates the second slot for transmitting the first reference signal. The second slot is located after

EP 4 770 231 A1

the first slot. The second slot is a next slot reserved by the first terminal device for beam sweeping, namely, a next slot reserved for transmitting the first reference signal.

For example, as shown in FIG. 11B, when the first terminal device sends the first reference signal in the slot t2, the slot t2 does not include a PSSCH/PSFCH, but includes a PSCCH, and the first terminal device sends the fourth indication information over the PSCCH.

In this application, the first terminal device may further send seventh indication information in the first slot, where the seventh indication information indicates at least one fourth resource in the second slot, and the fourth resource is used to transmit the first reference signal. In this way, during transmission of the first reference signal, a reserved resource in a next slot can be used for transmitting the first reference signal. For example, in FIG. 11B, the first terminal device sends the seventh indication information over the PSCCH in the slot t2.

Step 604: The third terminal device measures the at least one first reference signal in the first slot.

The third terminal device may further transmit the measurement result of the first reference signal by using the second resource, and correspondingly the first terminal device receives the measurement result. The second resource is indicated by the third indication information, or the second resource is preconfigured or preset. How the third terminal device specifically measures the first reference signal is not limited in this application.

In an implementation, the measurement result includes at least one of an RSRP and a CRI of the first reference signal. The measurement result may further include other information, which is not enumerated one by one herein.

The first terminal device may select a first reference signal based on the measurement result, and use a beam direction of the first reference signal as a direction of a transmit beam. When communicating with the third terminal device subsequently, the terminal device may send information to the third terminal device by using the transmit beam. How the first terminal device determines a first reference signal based on the measurement result is not limited in this application. Details are not described herein.

According to the foregoing method, a flexible method for determining a reference signal resource is implemented through sensing and resource selection, and the first slot determined in the resource selection window is an unreserved slot or a slot reserved for transmitting the second reference signal. Therefore, a same slot is not shared with a resource for data transmission, so that sending of the first reference signal in the first slot does not interfere with data transmission in the first slot, thereby ensuring reliability of data transmission. Further, if each reference signal corresponds to one beam direction, because a same slot is not shared with a resource for data transmission, a receive power of data in the first slot does not change rapidly due to a change of a beam direction of at least one first reference signal sent in the first slot, thereby ensuring reliability of data transmission.

In this application, for a terminal device selected for data transmission in the resource selection window, for example, a fourth terminal device, when the fourth terminal device receives the first indication information, to determine that the first slot is used to transmit the first reference signal, during resource selection, the fourth terminal device excludes all resources included in the first slot. In other words, a resource selected for data transmission is located outside the first slot, that is, the resource for data transmission is not selected in the first slot. This may also be understood as that, when the fourth terminal device selects a resource, the resource selected for data transmission is not located in the first slot.

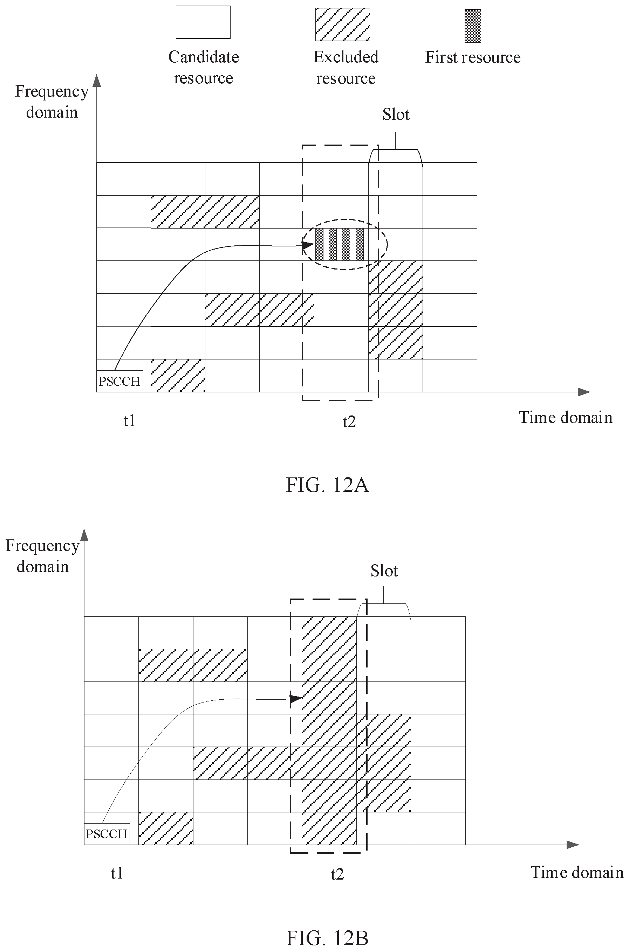

For example, as shown in FIG. 12A, the fourth terminal device receives the first indication information over a PSCCH in a slot 0, and the fourth terminal device may further receive the second indication information over the PSCCH. The fourth terminal device determines, based on the first indication information, that a slot 3 is used to transmit the first reference signal, and may further determine the at least one first resource in the slot 3 based on the second indication information. In this case, the fourth terminal device uses all resources in the slot 3 as excluded resources, and no longer selects, from the slot 3, a resource for data transmission. For example, as shown in FIG. 12B, the fourth terminal device uses all resources in the slot 3 as excluded resources.

Further, optionally, when selecting a resource for data transmission, the fourth terminal device preferentially does not occupy an idle slot, that is, preferentially selects a resource from slots including the resource reserved for data transmission, to ensure that a specific quantity of available slots is used to transmit a reference signal (that is, beam sweeping).

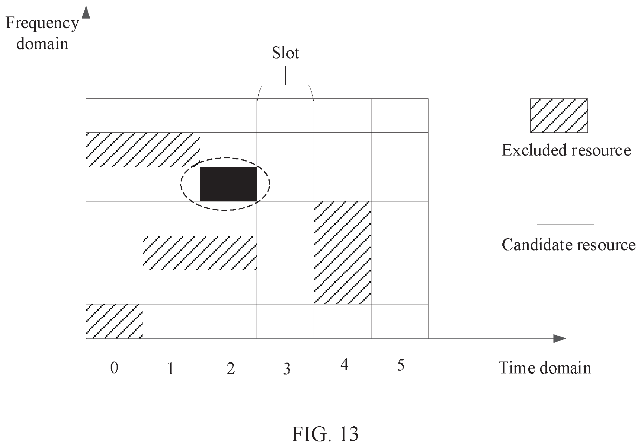

For example, as shown in FIG. 13, if there is no resource reserved by another terminal device in a slot 3 and a slot 5, the fourth terminal device preferentially selects a resource in a slot reserved by another terminal device, and reserves a complete idle slot for beam sweeping. For example, as shown in the figure, the fourth terminal device selects a resource in a slot 2, namely, a resource shown in a black-filled grid in the figure. The idle slot means that any resource included in a slot is not reserved.

This application further provides a method, for transmitting a first reference signal in a slot including a resource for data transmission, thereby improving an opportunity of successfully selecting a resource for transmitting the first reference signal. Details are described below.

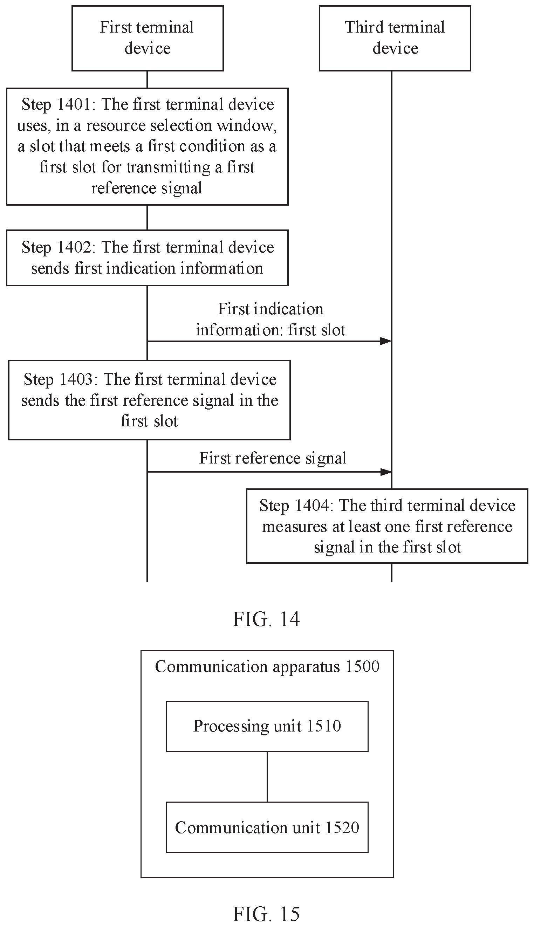

FIG. 14 is a schematic flowchart of a communication method according to an embodiment of this application. The method includes the following steps.

Step 1401: A first terminal device uses, in a resource selection window, a slot that meets a first condition as a first slot for transmitting a first reference signal.

The resource selection window includes at least one slot. The first condition includes at least one of the following: A quantity of reserved resources in the slot is less than or equal to a first quantity, and a priority of data corresponding to a reserved resource in the slot is less than or equal to a first priority. The priority of the data may be an L1 priority.

For example, in step 1401, the first terminal device may select a resource from the SL resource pool in the foregoing manner of step 1 to step 8. However, step 5 is replaced with the following step 5B, and step 8 is replaced with the following step 8B.

Step 5B: When all the following conditions are met, a corresponding resource is excluded from $S_A$:

(a) A slot that is reserved for all periodic resources configured in a resource pool and that corresponds to a slot not sensed by the first terminal device in the sensing window is excluded. For example, the slot is a slot in which the first terminal device is in a sending state. Due to a limitation of a half-duplex transceiver, when the first terminal device is in the sending state, the first terminal device cannot perform receiving, and cannot sense the sending slot.

Step 8B: The first terminal device selects at least one time-frequency resource ($r_0$, $r_1$, $r_2$, ...) from the slot that meets the first condition in $S_A$, to send the first reference signal.

Alternatively, the first terminal device may not determine the resource set $S_A$ by using the foregoing step 1 to step 8. A method for determining the resource set $S_A$ is not limited in this application.

In a first implementation, after determining the first slot, the first terminal device may no longer determine whether the foregoing formula (1) or formula (3) is met. The first terminal device may send the first reference signal in the first slot even if the foregoing formula (1) or formula (3) is not met.

In a second implementation, after determining the first slot according to the procedure in FIG. 6, the first terminal device determines that the foregoing formula (1) or formula (3) is not met. In this case, the first terminal device re-determines the first slot according to the procedure in FIG. 14.

In a third implementation, after determining the first slot according to the procedure in FIG. 6, the first terminal device determines that the foregoing formula (1) or formula (3) is not met. In this case, the first terminal device may reduce a period of sending the first reference signal, that is, reduce a beam sweeping frequency. A beam sweeping period is increased to reduce a proportion of beam sweeping slots in a specific time period, thereby improving symbol density of beam sweeping, that is, using more symbols for beam sweeping in one slot. Alternatively, the first terminal device sends sixth indication information, where the sixth indication information indicates a third terminal device to perform beam sweeping. The sixth indication information may be 1-bit identification information, and is carried in SCI and/or a MAC CE, to indicate the third terminal device to reserve and indicate a beam sweeping resource. Because a constraint of the beam sweeping period is related to a quantity of slots in which the first terminal device has sent the first reference signal, when the first terminal device cannot perform sending, the third terminal device may perform beam sweeping. When indicating/requesting the third terminal device to perform beam sweeping, the first terminal device may indicate a time-frequency resource for beam sweeping, or send only indication/request information, so that the third terminal device determines the time-frequency resource for beam sweeping.

Step 1402: The first terminal device sends first indication information, where the first indication information indicates the first slot.

The first terminal device may further send second indication information, third indication information, fourth indication information, and the like. For details, refer to descriptions in step 602.

Step 1403: The first terminal device sends the first reference signal in the first slot.

For the foregoing content, refer to descriptions in step 603.

Step 1404: The third terminal device measures at least one first reference signal in the first slot.

For the foregoing content, refer to descriptions in step 604.

According to the foregoing method, there are more slots available for transmitting reference signals in the resource selection window, which increases a probability of selecting the first slot, improves a success rate of transmitting the first reference signal, and ensures continuous transmission opportunities for beam sweeping. Further, because fewer resources are determined for data transmission in the first slot in the resource selection window, or a priority of a resource for data transmission is low, a reference signal transmitted in the first slot causes less interference to data transmission. This can improve resource utilization.

It may be understood that, to implement the functions in the foregoing embodiments, the terminal device or the network device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

The following are diagrams of possible structures of communication apparatuses according to embodiments of this application. The communication apparatuses may be configured to implement functions of the terminal device or the network device in the foregoing method embodiments. Therefore, beneficial effects of the foregoing method embodiments can also be implemented.

As shown in FIG. 15, a communication apparatus 1500 includes a processing unit 1510 and a communication unit 1520. The communication apparatus 1500 is configured to implement a function of the terminal device or the network device in the foregoing method embodiments.

When the communication apparatus 1500 is configured to implement the functions of the first terminal device,

the processing unit is configured to determine a first slot in a resource selection window, where the first slot is used to transmit a first reference signal, the resource selection window includes at least one slot, and the first slot is an unreserved slot, or the first slot is a slot reserved for transmitting a second reference signal; and
the communication unit is configured to send first indication information, where the first indication information indicates the first slot.

In an implementation, the processing unit is specifically configured to:
if the resource selection window includes a slot reserved for transmitting the second reference signal, the slot reserved for transmitting the second reference signal is used as the first slot.

In an implementation, the processing unit is further configured to:
determine at least one first resource, where the at least one first resource is located in the first slot, and the first resource is used to carry the first reference signal.

The communication unit is further configured to send second indication information, where the second indication information indicates the at least one first resource.

In an implementation, the communication unit is further configured to:
send at least one first reference signal on the at least one first resource.

In an implementation, before the communication unit sends the first indication information, the processing unit is further configured to:
determine that the following condition is met:

$$\sum_{i \geq k} CR_{data}(i) + CR_{beam,subch} \leq CR_{Limit}(k)$$

$CR_{data}(i)$ represents a channel occupancy ratio CR for physical sidelink shared channel PSSCH transmission with a priority i in sidelink control information SCI from another terminal device, $CR_{Limit}(k)$ is determined based on a priority k and a channel busy ratio CBR of a first window, k is predefined, preconfigured, or network-configured, and $CR_{beam,subch}$ represents a ratio of a quantity of subchannels occupied by the first reference signal that is already transmitted in the first window and a quantity of subchannels occupied by the first reference signal that is to be transmitted in a second window to a total quantity of subchannels in the first window, where an index range of a slot included in the first window is [y-a, y-1], an index range of a slot included in the second window is [y, y+b], a slot y is a slot for sending the first reference signal, and a and b are predefined, preconfigured, or network-configured.

In an implementation, before the communication unit sends the first indication information, the processing unit is further configured to:
determine that the following condition is met:

$$CR_{beam,slot} = \frac{S}{S_{total}} \leq CR_{thr} \text{ or } CR_{beam,slot} \leq CR_{Limit}$$

$CR_{thr}$ is predefined, preconfigured, or network-configured, $CR_{Limit}$ is determined based on a channel busy ratio CBR of a first window, S represents a sum of a quantity of slots occupied by the first reference signal that is already transmitted in the first window and a quantity of slots occupied by the first reference signal that is to be transmitted in a second window, and $S_{total}$ represents a total quantity of slots in the first window, where an index range of a slot included in the first window is [y-a, y-1], an index range of a slot included in the second window is [y, y+b], a slot y is a slot for sending the first reference signal, and a and b are predefined, preconfigured, or network-configured.

When the communication apparatus 1500 is configured to implement the functions of the third terminal device,

the communication unit is configured to receive first indication information from a first terminal device, where the first indication information indicates a first slot for transmitting a first reference signal, the first slot is a slot in a resource selection window, the resource selection window includes at least one slot, and the first slot is an unreserved slot, or the first slot is a slot reserved for transmitting a second reference signal; and
the processing unit is configured to measure at least one first reference signal in the first slot.

In an implementation, the communication unit is further configured to:

receive second indication information, where the second indication information indicates at least one first resource, and the at least one first resource is located in the first slot; and
receive the at least one first reference signal on the at least one first resource.

In an implementation, the communication unit is further configured to:
transmit a measurement result of the first reference signal on a second resource, where the second resource is indicated by third indication information, or the second resource is preconfigured or preset.

When the communication apparatus 1500 is configured to implement the functions of the second terminal device,

the communication unit is configured to receive first indication information from a first terminal device, where the first indication information indicates a first slot for transmitting a first reference signal, the first slot is a slot in a resource selection window, the resource selection window includes at least one slot, and the first slot is an unreserved slot, or the first slot is a slot reserved for transmitting a second reference signal; and
the processing unit is configured to exclude, when selecting a resource, all resources included in the first slot.

When the communication apparatus 1500 is configured to implement the functions of the first terminal device,

the processing unit is configured to: use, in a resource selection window, a slot that meets a first condition as a first slot for transmitting a first reference signal, where the resource selection window includes at least one slot, and the first condition includes at least one of the following: A quantity of reserved resources in the slot is less than or equal to a first quantity, and a priority of data corresponding to a reserved resource in the slot is less than or equal to a first priority; and the communication unit is configured to send first indication information, where the first indication information indicates the first slot.

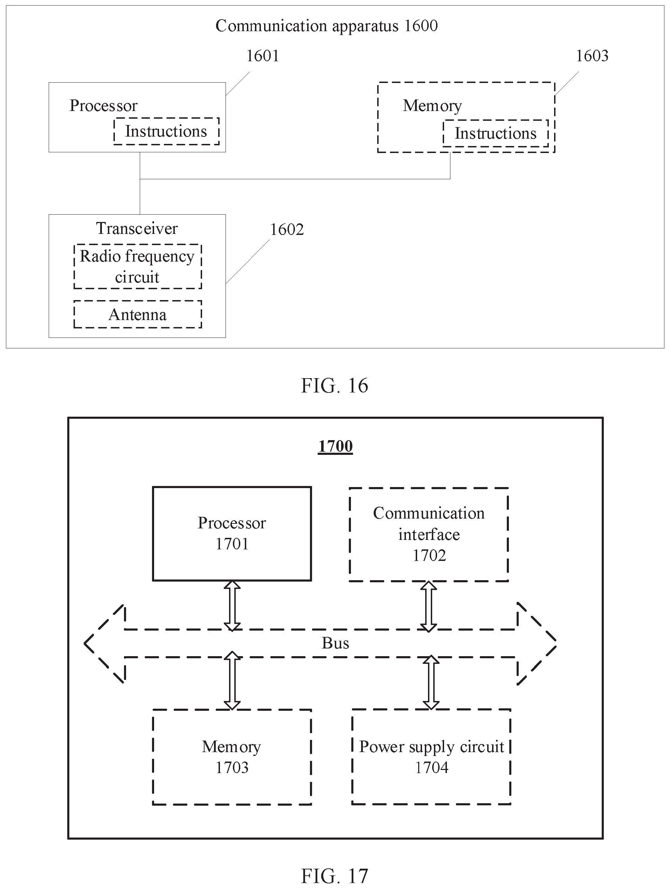

For more detailed descriptions about the processing unit 1510 and the communication unit 1520, directly refer to related descriptions in the foregoing method embodiments. Details are not described herein.
It should be understood that division into units of the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or a part of the units may be integrated, or may be implemented independently. The processing element herein may also be a processor, and may be an integrated circuit having a signal processing capability. In an implementation process, operations in the foregoing methods or the foregoing units may be implemented by using a hardware integrated logic circuit in the processor element or may be implemented in a form of software invoked by the processing element.
In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form of a program scheduled by the processing element, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).
The foregoing unit for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.
In another possible product form, the terminal device or the network device in embodiments of this application may be implemented by using a general bus architecture. For ease of description, FIG. 16 is a diagram of a structure of a communication apparatus 1600 according to an embodiment of this application. The communication apparatus 1600 includes a processor 1601 and a transceiver 1602. The communication apparatus 1600 may be a first device, or a chip or a chip system in the first device. Alternatively, the communication apparatus 1600 may be a second device, or a chip or a module in the second device. FIG. 16 shows only main components of the communication apparatus 1600. In addition to the processor 1601 and the transceiver 1602, the communication apparatus 1600 may include a memory 1603 and an input/output apparatus (not shown in the figure).

Optionally, the processor 1601 is mainly configured to: process a communication protocol and communication data, control the entire communication apparatus, execute a software program, and process data of the software program. The memory 1603 is mainly configured to store the software program and data. The transceiver 1602 may include a radio frequency circuit and an antenna. The radio frequency circuit is mainly configured to: perform conversion between a baseband signal and a radio frequency signal, and process a radio frequency signal. The antenna is mainly configured to: receive and send a radio frequency signal in a form of an electromagnetic wave. The input/output apparatus, such as a touchscreen, a display, or a keyboard, is mainly configured to: receive data input by a user and output data to the user.

Optionally, the processor 1601, the transceiver 1602, and the memory 1603 may be connected through a communication bus.

After the communication apparatus is powered on, the processor 1601 may read the software program from the memory 1603, interpret and execute instructions of the software program, and process data of the software program. When data needs to be sent wirelessly, the processor 1601 performs baseband processing on the to-be-sent data, and then outputs a baseband signal to the radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 1601. The processor 1601 converts the baseband signal into data for processing.

In another implementation, the radio frequency circuit and the antenna may be disposed independently of the processor for baseband processing. For example, in a distributed scenario, the radio frequency circuit and the antenna may be remotely disposed independently of the communication apparatus.

In some embodiments, in terms of hardware implementation, a person skilled in the art may figure out that the communication apparatus 1500 may be in a form of the communication apparatus 1600 shown in FIG. 16.

In an example, functions/implementation processes of the processing unit 1510 in FIG. 15 may be implemented by the processor 1601 in the communication apparatus 1600 shown in FIG. 16 by invoking computer-executable instructions stored in the memory 1603. Functions/implementation processes of the communication unit 1520 in FIG. 15 may be implemented by the transceiver 1602 in the communication apparatus 1600 shown in FIG. 16.

In another possible product form, the terminal device or the network device in this application may use a composition structure shown in FIG. 17, or include components shown in FIG. 17. FIG. 17 is a diagram of composition of a communication apparatus 1700 according to this application.

As shown in FIG. 17, the communication apparatus 1700 includes at least one processor 1701. Optionally, the communication apparatus further includes a communication interface 1702.

When related program instructions are executed in the at least one processor 1701, the apparatus 1700 may be enabled to implement the method provided in any one of the foregoing embodiments and any possible design of the method. Alternatively, the processor 1701 is configured to implement, by using a logic circuit or executing code instructions, the method provided in any one of the foregoing embodiments and any possible design of the method.

The communication interface 1702 may be configured to: receive the program instructions and transmit the program instructions to the processor. Alternatively, the communication interface 1702 may be configured to perform communication interaction between the communication apparatus 1700 and another communication device, for example, exchange control signaling and/or service data. For example, the communication interface 1702 may be configured to: receive a signal from an apparatus other than the communication apparatus 1700, and transmit the signal to the processor 1701, or send a signal from the processor 1701 to a communication apparatus other than the communication apparatus 1700.

Optionally, the communication interface 1702 may be a code and/or data read/write interface circuit, or the communication interface 1702 may be a signal transmission interface circuit between a communication processor and a transceiver, or may be a pin of a chip.

Optionally, the communication apparatus 1700 may further include at least one memory 1703, and the memory 1703 may be configured to store the related program instructions and/or data that are/is required. It should be noted that the memory 1703 may be independent of the processor 1701, or may be integrated with the processor 1701. The memory 1703 may be located inside the communication apparatus 1700, or may be located outside the communication apparatus 1700. This is not limited.

Optionally, the communication apparatus 1700 may further include a power supply circuit 1704, and the power supply circuit 1704 may be configured to supply power to the processor 1701. The power supply circuit 1704 may be located in a same chip as the processor 1701, or may be located in a chip other than a chip in which the processor 1701 is located.

Optionally, the communication apparatus 1700 may further include a bus, and parts of the communication apparatus 1700 may be interconnected through the bus.

In some embodiments, in terms of hardware implementation, a person skilled in the art may figure out that the communication apparatus 1500 shown in FIG. 15 may be in a form of the communication apparatus 1700 shown in FIG. 17.

In an example, functions/implementation processes of the processing unit 1510 in FIG. 15 may be implemented by the processor 1701 in the communication apparatus 1700 shown in FIG. 17 by invoking computer-executable instructions stored in the memory 1703. Functions/implementation processes of the communication unit 1520 in FIG. 15 may be implemented by the communication interface 1702 in the communication apparatus 1700 shown in FIG. 17.

It should be noted that the structure shown in FIG. 17 does not constitute a specific limitation on the terminal device or the network device. For example, in some other embodiments of this application, the terminal device or the network device may include more or fewer components than those shown in the figure, or a combination of some components, or splits from some components, or a different component layout. The components shown in the figure may be implemented by hardware, software, or a combination of software and hardware.

When the foregoing communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the foregoing communication apparatus is a module used in a base station, the module in the base station implements functions of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, all or a part of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the protection scope defined by the following claims and their equivalent technologies.

## Claims

1. A communication method, comprising:

   determining a first slot in a resource selection window, wherein the first slot is used to transmit a first reference signal, the resource selection window comprises at least one slot, and the first slot is an unreserved slot, or the first slot is a slot reserved for transmitting a second reference signal; and
   sending first indication information, wherein the first indication information indicates the first slot.

2. The method according to claim 1, wherein if the resource selection window comprises a slot reserved for transmitting the second reference signal, the slot reserved for transmitting the second reference signal is used as the first slot.

3. The method according to claim 1 or 2, wherein the method further comprises:

   determining at least one first resource, wherein the at least one first resource is located in the first slot, and the first resource is used to carry the first reference signal; and
   sending second indication information, wherein the second indication information indicates the at least one first resource.

4. The method according to claim 3, wherein the method further comprises:
   sending at least one first reference signal on the at least one first resource.

5. The method according to any one of claims 1 to 4, wherein the method further comprises:
   sending fourth indication information in the first slot, wherein the fourth indication information indicates a second slot for transmitting the first reference signal.

6. The method according to any one of claims 1 to 5, wherein before sending the first indication information, the method further comprises:

determining that the following condition is met:

$$\sum_{i \geq k} CR_{data}(i) + CR_{beam,subch} \leq CR_{Limit}(k), \text{ wherein}$$

$CR_{data}(i)$ represents a channel occupancy ratio CR for physical sidelink shared channel PSSCH transmission with a priority i in sidelink control information SCI from another terminal device, $CR_{Limit}(k)$ is determined based on a priority k and a channel busy ratio CBR of a first window, k is predefined, preconfigured, or network-configured, and $CR_{beam,subch}$ represents a ratio of a quantity of subchannels occupied by the first reference signal that is already transmitted in the first window and a quantity of subchannels occupied by the first reference signal that is to be transmitted in a second window to a total quantity of subchannels in the first window, wherein an index range of a slot comprised in the first window is [y-a, y-1], an index range of a slot comprised in the second window is [y, y+b], a slot y is a slot for sending the first reference signal, and a and b are predefined, preconfigured, or network-configured.

7. The method according to any one of claims 1 to 5, wherein before sending the first indication information, the method further comprises:

determining that the following condition is met:

$$CR_{beam,slot} = \frac{S}{S_{total}} \leq CR_{thr} \text{ or } CR_{beam,slot} \leq CR_{Limit}, \text{ wherein}$$

$CR_{thr}$ is predefined, preconfigured, or network-configured, $CR_{Limit}$ is determined based on a channel busy ratio CBR of a first window, S represents a sum of a quantity of slots occupied by the first reference signal that is already transmitted in the first window and a quantity of slots occupied by the first reference signal that is to be transmitted in a second window, and $S_{total}$ represents a total quantity of slots in the first window, wherein an index range of a slot comprised in the first window is [y-a, y-1], an index range of a slot comprised in the second window is [y, y+b], a slot y is a slot for sending the first reference signal, and a and b are predefined, preconfigured, or network-configured.

8. A communication method, comprising:

receiving first indication information from a first terminal device, wherein the first indication information indicates a first slot for transmitting a first reference signal, the first slot is a slot in a resource selection window, the resource selection window comprises at least one slot, and the first slot is an unreserved slot, or the first slot is a slot reserved for transmitting a second reference signal; and
measuring at least one first reference signal in the first slot.

9. The method according to claim 8, wherein the method further comprises:

receiving second indication information, wherein the second indication information indicates the at least one first resource, and the at least one first resource is located in the first slot; and
receiving the at least one first reference signal on the at least one first resource.

10. The method according to claim 8 or 9, wherein the method further comprises:
transmitting a measurement result of the first reference signal on a second resource, wherein the second resource is indicated by third indication information, or the second resource is preconfigured or preset.

11. The method according to any one of claims 8 to 10, wherein the method further comprises:

receiving fourth indication information in the first slot, wherein the fourth indication information indicates a second slot for transmitting the first reference signal; and
receiving and measuring the first reference signal in the second slot.

12. A communication method, comprising:

receiving first indication information from a first terminal device, wherein the first indication information indicates a first slot for transmitting a first reference signal, the first slot is a slot in a resource selection window, the resource selection window comprises at least one slot, and the first slot is an unreserved slot, or the first slot is a slot reserved for transmitting a second reference signal; and

excluding, when selecting a resource, all resources comprised in the first slot.

13. A communication method, comprising:

using, in a resource selection window, a slot that meets a first condition as a first slot for transmitting a first reference signal, wherein the resource selection window comprises at least one slot, and the first condition comprises at least one of the following: a quantity of reserved resources in the slot is less than or equal to a first quantity, and a priority of data corresponding to a reserved resource in the slot is less than or equal to a first priority; and

sending first indication information, wherein the first indication information indicates the first slot.

14. A communication apparatus, comprising:

a processing unit, configured to determine a first slot in a resource selection window, wherein the first slot is used to transmit a first reference signal, the resource selection window comprises at least one slot, and the first slot is an unreserved slot, or the first slot is a slot reserved for transmitting a second reference signal; and

a communication unit, configured to send first indication information, wherein the first indication information indicates the first slot.

15. The apparatus according to claim 14, wherein the processing unit is specifically configured to:
if the resource selection window comprises a slot reserved for transmitting the second reference signal, the slot reserved for transmitting the second reference signal is used as the first slot.

16. The apparatus according to claim 14 or 15, wherein the processing unit is further configured to:

determine at least one first resource, wherein the at least one first resource is located in the first slot, and the first resource is used to carry the first reference signal; and

the communication unit is further configured to send second indication information, wherein the second indication information indicates the at least one first resource.

17. The apparatus according to claim 16, wherein the communication unit is further configured to:
send at least one first reference signal on the at least one first resource.

18. The apparatus according to any one of claims 14 to 17, wherein before the communication unit sends the first indication information, the processing unit is further configured to:

determine that the following condition is met:

$$\sum_{i \geq k} CR_{data}(i) + CR_{beam,subch} \leq CR_{Limit}(k), \text{ wherein}$$

$CR_{data}(i)$ represents a channel occupancy ratio CR for physical sidelink shared channel PSSCH transmission with a priority i in sidelink control information SCI from another terminal device, $CR_{Limit}(k)$ is determined based on a priority k and a channel busy ratio CBR of a first window, k is predefined, preconfigured, or network-configured, and $CR_{beam,subch}$ represents a ratio of a quantity of subchannels occupied by the first reference signal that is already transmitted in the first window and a quantity of subchannels occupied by the first reference signal that is to be transmitted in a second window to a total quantity of subchannels in the first window, wherein an index range of a slot comprised in the first window is [y-a, y-1], an index range of a slot comprised in the second window is [y, y+b], a slot y is a slot for sending the first reference signal, and a and b are predefined, preconfigured, or network-configured.

19. The apparatus according to any one of claims 14 to 17, wherein before the communication unit sends the first indication information, the processing unit is further configured to:

determine that the following condition is met:

$$CR_{beam,slot} = \frac{S}{S_{total}} \leq CR_{\text{thr}} \ \text{ or } \ CR_{beam,slot} \leq CR_{\text{Limit}}, \text{ wherein}$$

$CR_{\text{thr}}$ is predefined, preconfigured, or network-configured, $CR_{\text{Limit}}$ is determined based on a channel busy ratio CBR of a first window, S represents a sum of a quantity of slots occupied by the first reference signal that is already transmitted in the first window and a quantity of slots occupied by the first reference signal that is to be transmitted in a second window, and $S_{total}$ represents a total quantity of slots in the first window, wherein an index range of a slot comprised in the first window is [y-a, y-1], an index range of a slot comprised in the second window is [y, y+b], a slot y is a slot for sending the first reference signal, and a and b are predefined, preconfigured, or network-configured.

20. A communication apparatus, comprising:

a communication unit, configured to receive first indication information from a first terminal device, wherein the first indication information indicates a first slot for transmitting a first reference signal, the first slot is a slot in a resource selection window, the resource selection window comprises at least one slot, and the first slot is an unreserved slot, or the first slot is a slot reserved for transmitting a second reference signal; and
a processing unit, configured to measure at least one first reference signal in the first slot.

21. The apparatus according to claim 20, wherein the communication unit is further configured to:

receive second indication information, wherein the second indication information indicates the at least one first resource, and the at least one first resource is located in the first slot; and
receive the at least one first reference signal on the at least one first resource.

22. The apparatus according to claim 20 or 21, wherein the communication unit is further configured to:
transmit a measurement result of the first reference signal on a second resource, wherein the second resource is indicated by third indication information, or the second resource is preconfigured or preset.

23. A communication apparatus, comprising:

a communication unit, configured to receive first indication information from a first terminal device, wherein the first indication information indicates a first slot for transmitting a first reference signal, the first slot is a slot in a resource selection window, the resource selection window comprises at least one slot, and the first slot is an unreserved slot, or the first slot is a slot reserved for transmitting a second reference signal; and
a processing unit, configured to exclude, when selecting a resource, all resources comprised in the first slot.

24. A communication apparatus, comprising:

a processing unit, configured to: use, in a resource selection window, a slot that meets a first condition as a first slot for transmitting a first reference signal, wherein the resource selection window comprises at least one slot, and the first condition comprises at least one of the following: a quantity of reserved resources in the slot is less than or equal to a first quantity, and a priority of data corresponding to a reserved resource in the slot is less than or equal to a first priority; and
a communication unit, configured to send first indication information, wherein the first indication information indicates the first slot.

25. A communication apparatus, comprising at least one processor, wherein the at least one processor is connected to a memory, and the at least one processor is configured to: read and execute program instructions stored in the memory, to enable the communication apparatus to perform the method according to any one of claims 1 to 13.

26. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 13 by using a logic circuit or by executing code instructions.

27. A computer-readable storage medium, wherein the storage medium stores a computer program or instructions, and when the computer program or the instructions are executed by a computer, the method according to any one of claims 1 to 13 is performed.

28. A chip, wherein the chip comprises a processor, and when the processor executes a computer program or instructions, the method according to any one of claims 1 to 13 is performed.

29. A computer program product, wherein when a computer reads and executes the computer program product, the method according to any one of claims 1 to 13 is performed.

FIG. 1

FIG. 2

Network apparatus

Terminal apparatus B

Terminal apparatus A

FIG. 3

CU

CU-CP

RRC

PDCP-C

E1

CU-UP

SDAP

PDCP-U

F1-C

F1-U

RLC

MAC

PHY

DU

FIG. 4

Network device

Terminal device

P-1

Beam

P-2

P-3

FIG. 5

First terminal
device

Third terminal
device

Step 601: The first terminal device
determines a first slot in a resource
selection window

Step 602: The first terminal device
sends first indication information

First indication
information: first slot

Step 603: The first terminal device
sends a first reference signal in the
first slot

First reference signal

Step 604: The third terminal device
measures at least one first reference
signal in the first slot

FIG. 6

Frequency
domain

$n-T_0$    Sensing window    $n-T^{SL}_{proc,0}$   n   $n+T_1$    Resource selection window    $n+T_2$   Time domain

FIG. 7

FIG. 8A

FIG. 8B

FIG. 9

FIG. 10

FIG. 11A

FIG. 11B

FIG. 12A

FIG. 12B

FIG. 13

```
┌─────────────────┐              ┌─────────────────┐
│  First terminal │              │  Third terminal │
│      device     │              │      device     │
└─────────────────┘              └─────────────────┘
         │                                │
┌─────────────────────────────┐           │
│ Step 1401: The first terminal│           │
│ device uses, in a resource   │           │
│ selection window, a slot that│           │
│ meets a first condition as a │           │
│ first slot for transmitting a│           │
│ first reference signal       │           │
└─────────────────────────────┘           │
         │                                │
┌─────────────────────────────┐           │
│ Step 1402: The first terminal│           │
│ device sends first indication│           │
│ information                  │           │
└─────────────────────────────┘           │
         │    First indication            │
         │  information: first slot       │
         │───────────────────────────────▶│
┌─────────────────────────────┐           │
│ Step 1403: The first terminal│           │
│ device sends the first       │           │
│ reference signal in the      │           │
│ first slot                   │           │
└─────────────────────────────┘           │
         │    First reference signal      │
         │───────────────────────────────▶│
         │            ┌───────────────────────────────┐
         │            │ Step 1404: The third terminal │
         │            │ device measures at least one  │
         │            │ first reference signal in the │
         │            │ first slot                    │
         │            └───────────────────────────────┘
         │                                │
```

FIG. 14

```
┌───────────────────────────────────────┐
│  Communication apparatus 1500          │
│                                        │
│      ┌──────────────────────────┐      │
│      │  Processing unit 1510     │      │
│      └──────────────────────────┘      │
│                   │                    │
│      ┌──────────────────────────┐      │
│      │ Communication unit 1520   │      │
│      └──────────────────────────┘      │
│                                        │
└───────────────────────────────────────┘
```

FIG. 15

Communication apparatus 1600

1601                                                1603

Processor                          Memory
  Instructions                       Instructions

Transceiver              1602
Radio frequency
    circuit
Antenna

FIG. 16

**1700**

Processor
1701

Communication
interface
1702

Bus

Memory
1703

Power supply circuit
1704

FIG. 17

## INTERNATIONAL SEARCH REPORT

| International application No. |
| --- |
| **PCT/CN2024/120057** |

| A. | CLASSIFICATION OF SUBJECT MATTER |
| --- | --- |

H04W72/0446(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, WPABSC, CNKI, 3GPP: 传输, 第一参考信号, 确定, 时隙, 选择, 预留, 资源选择窗, 信号接收功率, Transmission, First Reference Signal, Determination, Slot, Selection, Reservation, Resource Selection Window, rsrp

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115699930 A (GUANGDONG OPPO MOBILE TELECOMMUNICATIONS CORP., LTD.) 03 February 2023 (2023-02-03) description, paragraphs 0067-0382 | 1-5, 8-17, 20-29 |
| A | CN 115777223 A (QUALCOMM INC.) 10 March 2023 (2023-03-10) entire document | 1-29 |
| A | CN 116436578 A (HUAWEI TECHNOLOGIES CO., LTD.) 14 July 2023 (2023-07-14) entire document | 1-29 |
| A | WO 2023051086 A1 (HUAWEI TECHNOLOGIES CO., LTD.) 06 April 2023 (2023-04-06) entire document | 1-29 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 December 2024** | **18 December 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/120057**

| Patent document cited in search report | | | Publication date (day/month/year) | Patent family member(s) | | | Publication date (day/month/year) |
|---|---|---|---|---|---|---|---|
| CN | 115699930 | A | 03 February 2023 | WO | 2022040939 | A1 | 03 March 2022 |
| | | | | CN | 11634760 | A | 27 June 2023 |
| | | | | EP | 4207895 | A1 | 05 July 2023 |
| | | | | US | 2024090009 | A1 | 14 March 2024 |
| CN | 115777223 | A | 10 March 2023 | US | 2023232431 | A1 | 20 July 2023 |
| | | | | WO | 2021262577 | A1 | 30 December 2021 |
| | | | | EP | 4169316 | A1 | 26 April 2023 |
| | | | | IN | 202227061643 | A | 09 December 2022 |
| | | | | CN | 115777223 | A | 10 March 2023 |
| CN | 116436578 | A | 14 July 2023 | None | | | |
| WO | 2023051086 | A1 | 06 April 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311282176